# EUROPEAN PATENT APPLICATION

(11) **EP 0 915 012 A1**
(43) Date of publication of application: **12.05.1999**
(21) Application number: 97830551.4
(22) Date of filing: 28.10.1997
(51) Int. Cl.: B65B 5/10, B65G 61/00

(54) **Automatic system for filling palletized containers with ready packed food products**

(71) Applicant: Selematic di Amabile Vito e Carimando Angelo & C. snc., Eboli (SA) (IT)
(72) Inventor: Carimando, Angelo, Eboli (SA) (IT); Amabile, Vito, Eboli (SA) (IT)

(57) **Abstract**

An automatic system for filling palletised boxes with pre-packed goods (2) equipped with a system for the feeding and arranging of the pre-packed goods, an apparatus for the feeding and positioning of palletised boxes, and a programmable Cartesian handler which permits the wished for movement of the products thus placing them inside the containers, which, according to the production needs, can be presented in the filling station (12), on the same type of fixed dimension pallet as a single box (13), or as two boxes placed side by side on the pallet (14), or four boxes (15) on the pallet. The Cartesian handler is made up of two columns or arms (16) situated side by side, which, when previously programmed, automatically carry out a vertical movement between a lower picking up or depositing position, a higher position used for transporting the pre-packed goods and a horizontal traverse movement for the passage from the first to the second position, and equipped at the lower extremity of each arm (16), with a rectangular gripping organ (17), which picks up from the stratification conveyor (5), using pneumatic depression, at least one product or group of specially placed products .

## Description

### Technical field.

This invention regards an automatic filling system, in palletised boxes, which are of the same size as a pallet, a half pallet or a quarter pallet, in progressive layers of pre-packed goods, in cushion packs or boxes of pasta, legumes, rice, potato crisps, sweets etc.

### Background Art.

Due to the proliferation of large distribution chains and supermarkets, it has become more and more necessary to present to the public products in, cartons directly on pallets which have the horizontal container size of a whole pallet, a half pallet, or a quarter pallet, depending on the importance of the supermarket, of the space available in it, and of the type of product to be placed on display; the aim of this is to reduce the cost of packing the product, to eliminate the manpower necessary to stow the packets in the shelves on their arrival, and to subsequently throw out the remaining external packaging.

Nowadays, the filling of palletised boxes, preferably in cardboard (cartonbox), is carried out by taking the packages manually off the packaging plant exit, and still manually, placing them inside the cardboard cartons, with great difficulty due to their depth, and with no guarantees therefore as to the number of packets stowed in the cardboard cartons or to the rationality of the filling of the same.

The fact that this operation is carried out manually affects the efficiency of the packaging plant, even if a great deal of manpower is employed to fill the cartons. Due to commercial requirements, the same type of pre-packed products often needs different sizes of packaging, therefore it would be all advantage to be able to fill, on the same packaging line, palletised boxes of different sizes

### The object and important characteristics of the invention.

The object of this invention is to obtain an extremely rapid filling system, which is both trustworthy at a repetition level, rational and which piles the pre-packaged goods gently in the palletised boxes as well as having the capability to stack the number of layers of pre-packed goods in such a way as to have all absence of empty spaces, thus obtaining the perfect packaging which results in advantages in transport and an optimum conservation of the products contained.

Another object of this invention is that of realising a programmable handling system on controlled axes, which is completely automatic, capable of interacting with the system of feeding and arranging and the system of feeding and positioning the palletised boxes, and which is easily and rapidly adapted to production requirements.

Another object of this invention is that of being able to fill with pre-packed goods boxes or palletised cartons (cartonbox) of different sizes, equal to that of a pallet, or of a sub-multiple of the supporting surface of a pallet as required, handling always and in any case, the maximum number of packets that the most modern packaging plant for cushion packs is capable of producing (120-130 packets per minute).

Another object of this invention is that of realising a plant capable of passing from one size of palletised cardboard box (cartonbox) to others of different sizes with no special or complicated manual adjustment, but with automatic, memorizable adjustment.

A further object of this invention is the realisation of a plant which can be managed by one person, thus obtaining a substantial saving of manpower in respect to the systems in use today.

The aforesaid uses and objects, as well as others which will be specified in more detail in the following pages are fulfilled by an automatic system for filling palletised boxes with pre-packed goods, programmable according to a logic capable of interacting with, controlling, and setting a synchronism between a feeding, positioning and arranging plant for pre-packed goods, with a feeding and positioning plant for palletised boxes, and a Cartesian handler, characterised by two supporting handling organs, each supplied with an arm with a rectangular shaped gripping arm at its extremity which picks up at least one product or group of specially positioned products, using pneumatic depression, thus allowing a controlled movement of the products both horizontally and vertically, and which is further characterised by the fact that the pre-packed goods are picked up from a first or grouped position, and set down in a second or arranged position in the containers, which, according to production necessities, can be placed in the filling station on the same type of fixed-size pallet, as a single box two boxes side by side on the pallet, or four or more boxes if the gripping arms present on the handler are more than two.

### Description of the drawings.

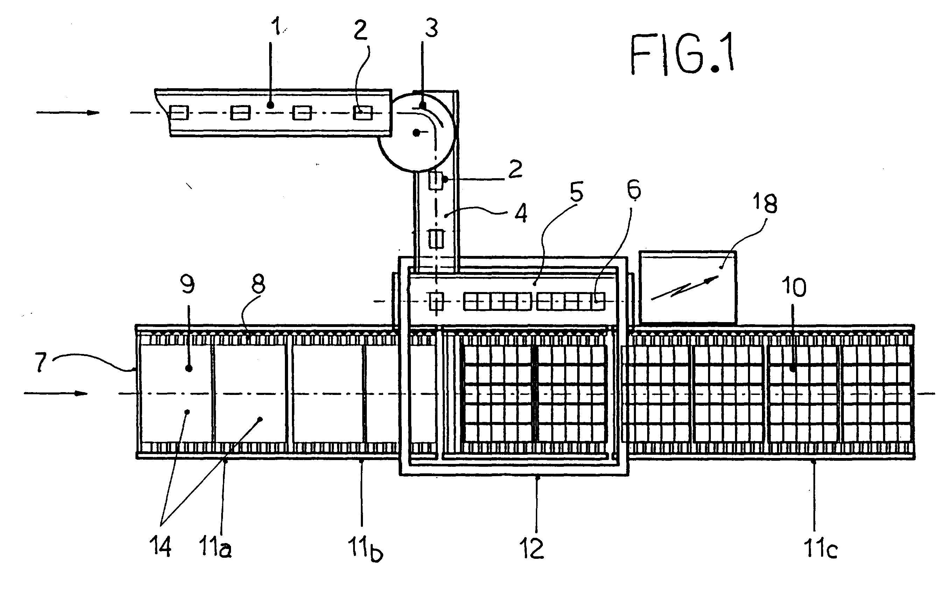

These and other characteristics and advantages will be made evident by the following descriptions and by the attached figures, supplied with the indicative and not limiting object in which: Fig. 1. shows a schematic plan of the line of handling and positioning of the pre-packed goods and that of the palletised boxes.

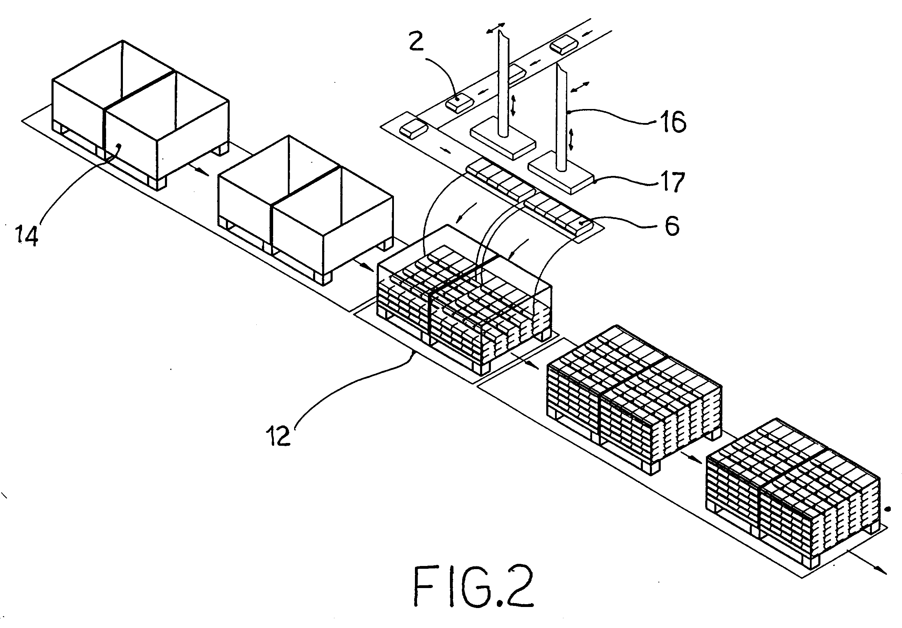

Fig. 2. shows a schematic prospect of the handling arms for the pre-packed goods, the feeding line of the palletised boxes and the successive filling of the palletised boxes.

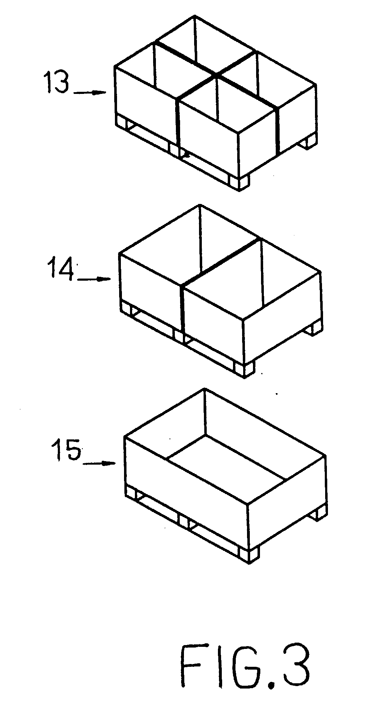

Fig. 3. shows a three-dimensional view of the disposition of the various types of palletised boxes to be filled.

In reference to the above figures, in (1) a first conveyor for pre-packed goods (2) is shown, in (3) a rotating device for packets (2) is shown, in (4) a further launching and belt conveyor for arranging the lines of packets is shown, in (5) a belt conveyor for stratification, motorised by a brushless motor with a step-by-step movement and electronic feeding control which are essential for arranging and optimising the arrangement of the lines of products in a single solution, in two halves (6), or in another arrangement as preferred.

In (7) the pallet feeding line is shown, motorised and equipped with a roller conveyor (8), which is outfitted with lateral guidelines to contain the pallets and with a sequence of photocells using which the empty palletised boxes (9) and the completely filled ones (10) are handled during the various manual inserting stations of (11a), waiting (11b), filling (12) and emitting (11c).

In (12) the station where the pre-packed goods are handled and boxed is shown. The boxes to be filled can be of various sizes, referring to standard sizes (palletised) or to the shapes and sizes preferred; in the case of palletised boxes the preferred sizes are sub multiples of the size of the reference pallet, that is, of a single box (13) on the pallet, two boxes side by side (14) on the pallet or four boxes (15).

To grip the line of products to be placed in the boxes, there is a unit combined with Cartesian axes on special highly resistant mechanical guide-line systems activated by brushless motors with the interposition of highly resistant timing belts, made up of a single mobile trolley, on which two supporting units or arms (16) are installed; conformed as tubular bodies in sections that are generally quadrangular which automatically carry out, having been previously programmed, a vertical movement between a lower position of lifting up or putting down, a higher position for transporting the pre-packed goods, and a horizontal traverse movement for the passage from the first to the second position.

On the lower extremity of each arm (16) there is the rectangular shaped gripping arm (17), which, using pneumatic depression, picks up at least one product or group of specially positioned products from position (5) on the stratification conveyor.

The gripping arms (17), are made to the personalised specific requirements for each typology of product, for example, they can also be conformed as a single plate instead of two independent plates placed side by side, in any case the characterising principle must be respected, that is, their maximum excursion of length must never exceed the horizontal dimension of the space to be filled in the box.

If it is wished to pass to another handling in which the grouping, picking up, and putting down positions are different for different products, it is sufficient to replace the plates, (17) with others of different sizes. The plates are easy to replace as they are fixed, to secure, by bolts.

It is notable that on the same feeding line (7), for the same size of pallet, the fact that a single box (13), two boxes side by side (14), four boxes (15), or an even larger number can be placed in the filling station (12), even in a pre-determined sequence, if the number of gripping and dropout arms present on the handler is more than two, and can be filled without penalising the global production capacity of the plant, with no difficulty of adjustment.

### Mode for Carrying out the invention.

The filling process which is the object of this invention starts from the characterising condition that the disposition of the boxes, on the pallet feeding line, make up always and in all cases, an area equal to that of a pallet, that is, if the box to be filled is of the same size as a pallet, only one box will be placed on the pallet itself, on the other hand, if it is necessary to fill boxes of a size equal to half a pallet, two boxes must be placed side by side on the pallet; if it is necessary to fill boxes of a size equal to a quarter of a pallet, four boxes in complementary contiguity must be positioned on the same pallet, continuing in the same way for all further subdivisions, if these are foreseen.

Conformed in this way, the pallets arrive, through a belt conveyor, at the filling station, where there is a programmable Cartesian handling apparatus, made up of two or more arms, outfitted at their extremities with specially conformed suction plates with rectangular bases, each of which has the characteristic of having the length of the largest side contained within the horizontal dimension of the space to be filled inside the box on the pallet.

A further machine supplies the positioning and grouping of the packets at the correct time in the filling station if necessary slightly overlapping them, in one or more rows of packets in sequence, whose essential characteristic, in one or the other case is their total length which must be equal to or slightly smaller than the horizontal dimension of the space inside the box to be filled on the pallet.

All three of these apparatuses are specially automated and pre-set to work in combination according to a logically programmable system which guarantees an accurate handling of the product, even if it is extremely fragile, a uniform distribution of the packets everywhere inside the cartonbox and a guaranteed number of packets inside each box.

In a preferred realisation, two rectangular based plates (17) are foreseen, self-contained, of the same length and capable of lifting up a layer of packets (6), however they are arranged, from the stratification conveyor (5) and lowering them simultaneously into one box if only one box is present on the pallet, or into two boxes placed side by side if two boxes are present on the pallet, or even into four contiguously placed boxes, if four boxes are present on the pallet, and of releasing, inside each one, a layer or half layer of packets. The handler is capable of controlling and determining the exact position for the release of the line of packets both obliquely and vertically, in order to optimise the progressive horizontal layering of the lines until each layer is complete, that is, equal to the area of the box, as well as the overlapping of the layers until the box itself is completely full.

It is clear that if there is only one box present on the pallet, both of the plates be will lowered into the one box and the stratification conveyor will not create fractions of the line; on the contrary, if two contiguous boxes are present on the pallet, the two suction plates will be lowered simultaneously into the two boxes, evacuating, from the stratification conveyor, always and in any case, a complete line of packets, disposed in appropriate fractions.

Finally, in the case that four boxes, each equal to a quarter of a pallet, must be filled, the machine will function as for the filling of two cartons of the dimensions of half a pallet, placed side by side, leaving just the amount of space necessary in the central area between the two boxes, once the first two boxes have been filled, for the presence of the longitudinal dividing ribs.

The plant is driven by a single electrical control panel, equipped with PLC, magnetothermic protection on the motors, autodiagnosis, automatic adjustment of the plant, programmes with memorizable functioning, video with man-machine interface keyboard.

Thus described, the present invention presents itself as a robot with high-level performance in terms of speed, versatility, functionality and efficiency, and with fit operating autonomy in the carrying out of the tasks entrusted to it.

From all that has been described and illustrated above, it can be seen that the invention fulfils the objectives proposed.

Formal and structural variations can be applied to this idea of a solution, in the sense that all the details can be substituted by other elements technically equivalent, in practice, the dimensions and the contingent shapes can be any that are in accordance with needs, without leaving the dominion of the invention, which remains as summarised in the following claims.

## Claims

1. Automatic system for filling palletised boxes with pre-packed goods, programmable, according to a logic that is capable of interacting with, controlling and setting up a synchronism between a plant for the feeding, positioning and arranging of pre-packed goods, with a plant for the feeding and positioning of palletised boxes, and with a Cartesian handler, equipped with two handling arms placed side by side, each equipped with an arm on the extremity of which is a gripping organ, which picks up, using pneumatic depression, at least one product or group of products, specially positioned, thus allowing the products to be handled both horizontally and vertically, and is further characterised by the fact that the picking up of the pre-packed goods is carried out from a first or grouped position, to be put down in a second or arranged position inside the boxes, which, according to production needs, can be presented in the filling station, on the same type of pallet of fixed dimensions, as a single box or two boxes placed side by side, or four boxes or even in greater numbers if the number of gripping organs present on the handler is more than two.

2. An automatic system for filling boxes with pre-packed goods as in claim 1), characterised by the fact that the plan for the feeding, positioning and arranging of pre-packed goods is made up of a first conveyor (1) of pre-packed goods (2), of a rotating device (3) for the packets, and of a launching and feeding plant (4) for the arranging of the lines of packets; of a belt conveyor (5), a stratification conveyor motorised by a brushless motor with a step-by-step movement, electronically controlled feeding, which is essential for the arranging and optimising of the disposition of the goods into one or two lines (6) or in another disposition as preferred, the essential characteristic of which is, in one or the other case, the total length of the line or lines, which must be equal to or slightly smaller than the horizontal dimension of the space inside the box on the pallet that is to be filled.

3. An automatic system for filling boxes with pre-packed goods as in claim 1), characterised by the fact that plant for the feeding and positioning of the palletised boxes is made up of a feeding line of boxes on pallets (7), motorised, and equipped with roller conveyors (8) outfitted with lateral pallet- restraining guides and a sequence of photocells, using which the empty palletised boxes (9) and the completely filled ones (10), are handled between the various stations of manual intake (11a), waiting (11 b), filling (12) and emitting (11c).

4. An automatic system for filling boxes with pre-packed goods as in claim 1), characterised by the fact that the Cartesian handler is equipped with a single mobile trolley on a system of special highly resistant mechanical linear guides, which are activated by brushless motors with the interposition of high resistance timing belts, on which are assembled two sustaining units or arms (16), conformed as tubular bodies with sections that are generally quadrangular and which carry out automatically, when previously programmed, a vertical movement between a lowered lifting or depositing position and a higher transporting position for the pre-packed goods and a horizontally traverse movement for the passage from the first to the second position.

5. An automatic system for filling boxes with pre-packed goods as in claims 1) and 4) characterised by the fact that on the lower extremity of each arm (16) there is a gripping organ (17), of a rectangular shape, which lifts, using pneumatic depression, from the position (5) on the stratification conveyor, at least one product or group of products specially positioned and conformed.

6. Gripping organs as in the preceding claim, also conformed as a single plate instead of two independent plates placed side by side, in all cases respecting the principle that their maximum excursion in length is not more than the space inside the box that is to be filled.

7. Gripping organs, as in one or more of the above claims, which can easily be replaced with others of different sizes, given that they are fixed to secure with bolts.

8. Gripping organs as in claims 1), 5), 6), and 7) characterised by the fact that their rectangular based plates (17) are capable of picking up a layer of packets (6), however they have been combined, from the stratification conveyor (5) and lowering them simultaneously into a single box, if only one box is present on the pallet, or into two boxes disposed side by side, if two boxes are present on the pallet, or into four boxes placed contiguously, if there are four boxes present on the pallet, leaving inside each box respectively a layer or half layer of packets.

9. A Cartesian handler as in one or more of the above claims, capable of controlling and deciding the precise release position of the line of packets both transversally and vertically, that is, in order to optimise the horizontal stratification of the line up to the completion of the layer equal to the area of the box, as well as the overlapping of the layers until the box itself is completely full.

10. The filling process which uses all three of the automated apparatuses arranged in such a way as to be able to work in combination according to a system with programmable logic, as claimed in claim 1) and characterised by the fact that if, in the filling station (12), on the pallet a single box (13) which occupies the whole area of the pallet is present, both the plates (17) will lower into the box and the stratification conveyor (5) will not create fractions of the layers of packets; on the contrary, if two boxes placed contiguously (14) are present on the pallet, the two suction plates will lower simultaneously into the two boxes, emitting always and in any case a complete layer of lines of packets from the stratification conveyor, but disposed in fractions (6); finally, in the case that four boxes (15), each of the size of a quarter pallet, are to be filled, the handler will act as if for two boxes placed side by side and each of the same size as a half pallet, leaving exactly the amount of space necessary in the centre area, after the first two boxes have been filled, for the presence of the longitudinal dividing ribs between the four boxes.
